# FASCICULE DE BREVET EUROPEEN

(11) **EP 1 225 376 B1**
(45) Date de publication et mention de la délivrance du brevet: **04.08.2004**
(21) Numéro de dépôt: 01403350.0
(22) Date de dépôt: 21.12.2001
(51) Int. Cl.: F16H 63/30

(54) **Dispositif de commande de passage d'un rapport de marche arrière à précision mécanique accrue pour boite de vitesses**
Vorrichtung zum Schalten des Rückwärtsganges mit hoher mechanischen Präzision für Schaltgetriebe
Device for changing into the reverse gear with high machanical precision for gearboxes

(30) Priorité: 16.01.2001 FR 0100538
(43) Date de publication de la demande: 24.07.2002
(73) Titulaire: Peugeot Citroen Automobiles SA, 92200 Neuilly sur Seine (FR)
(72) Inventeur: Bertolino, Walter, 78780 Maurecourt (FR)
(74) Mandataire: Bentz, Jean-Paul

(56) Documents cités:
- EP-A- 0 197 008
- US-A- 5 778 728

## Description

L'invention concerne, de façon générale, un dispositif de commande de passage d'un rapport de marche arrière pour une boîte de vitesses.

Plus précisément, l'invention concerne un dispositif de commande de passage d'un rapport de marche arrière du type de ceux qui comprennent au moins un doigt de passage, un levier d'inversion de mouvement, une chape, et une cale d'épaisseur, la chape présentant des première et seconde joues en regard l'une de l'autre, le levier étant monté pivotant, entre les joues de la chape, autour d'un axe de basculement intermédiaire entre des extrémités menante et menée de ce levier, l'extrémité menée du levier étant sélectivement actionnée par le doigt de passage, et la cale d'épaisseur étant disposée sur l'axe de basculement du levier et interposée entre le levier et la première joue au moins de la chape pour éviter un déplacement transversal du levier vers cette première joue au moins.

Bien que les dispositifs de ce type soient connus et utilisés depuis longtemps, l'augmentation du nombre de rapports disponibles sur les boîtes de vitesses et la recherche permanente d'une réduction de poids et d'encombrement des organes mécaniques des véhicules automobiles font apparaître des contraintes nouvelles sur la conception et la fabrication de ces dispositifs.

Il est ainsi apparu nécessaire d'augmenter la précision mécanique de ces dispositifs, en particulier en fonctionnement, de manière à éviter toute difficulté d'actionnement du levier de passage de marche arrière par le doigt de passage et tout risque d'accrochage intempestif d'un organe autre que ce levier par le doigt de passage lors d'une action de passage de la marche arrière.

Dans ce contexte, l'invention a précisément pour but de proposer un dispositif de commande de passage de marche arrière répondant à ce besoin.

EP-A-0 197 008 décrit une boîte de vitesses à dispositif de commande de passage d'un rapport de marche arrière conforme au préambule de la revendication 1, mais dont le but est d'empêcher le désengagement accidentel de la marche arrière lorsque le véhicule se déplace.

L'invention concerne ainsi un dispositif de commande de passage d'un rapport de marche arrière ayant les caractéristiques énoncées dans la partie caractérisante de la revendication 1.

Dans le dispositif de l'invention, la cale d'épaisseur peut également être interposée entre le levier et la seconde joue de la chape pour éviter un déplacement transversal du levier vers cette seconde joue.

Dans ce cas, le dispositif de l'invention comprend avantageusement une seconde cale de compensation interposée entre la seconde joue de la chape et une seconde zone d'alignement du levier, intermédiaire entre l'axe de basculement et la première extrémité de ce levier, pour éviter une flexion de ce levier en direction de la seconde joue de la chape.

La cale d'épaisseur peut, de façon connue en soi, être constituée par un moyeu transversal solidaire du levier et disposé sur l'axe de basculement de ce levier.

Le levier peut lui-même être formé par une tôle découpée, auquel cas chaque cale de compensation est par exemple formée par une languette découpée dans la tôle du levier et pliée.

En cas de besoin, la languette formant l'une des première et seconde cales de compensation peut être découpée dans la languette formant l'autre cale de compensation.

La distinction entre les première et seconde zones d'alignement du levier peut être superflue, ces zones d'alignement pouvant éventuellement être confondues ou au moins sensiblement confondues.

Enfin, selon le modèle de levier utilisé, la première extrémité de ce levier peut être constituée par l'extrémité menée de ce levier, ou par l'extrémité menante de ce levier.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue schématique en coupe d'un dispositif connu;
- la Figure 2 est une vue partielle en perspective d'un dispositif connu, mettant en oeuvre un premier type de levier;
- la Figure 3 est une vue partielle en perspective d'un dispositif conforme à l'invention, mettant en oeuvre un levier du premier type;
- la Figure 4 est une vue partielle de profil du dispositif illustré à la Figure 3;
- la Figure 5 est une vue complète en perspective d'un dispositif conforme à l'invention, mettant en oeuvre un levier premier type;
- la Figure 6 est une vue partielle en perspective d'un dispositif connu, mettant en oeuvre un second type de levier;
- la Figure 7 est une vue partielle en perspective d'un dispositif conforme à l'invention, mettant en oeuvre un levier du second type;
- la Figure 8 est une vue partielle de profil du dispositif illustré à la Figure 7; et
- la Figure 9 est une vue complète en perspective d'un dispositif conforme à l'invention, mettant en oeuvre un levier du second type.

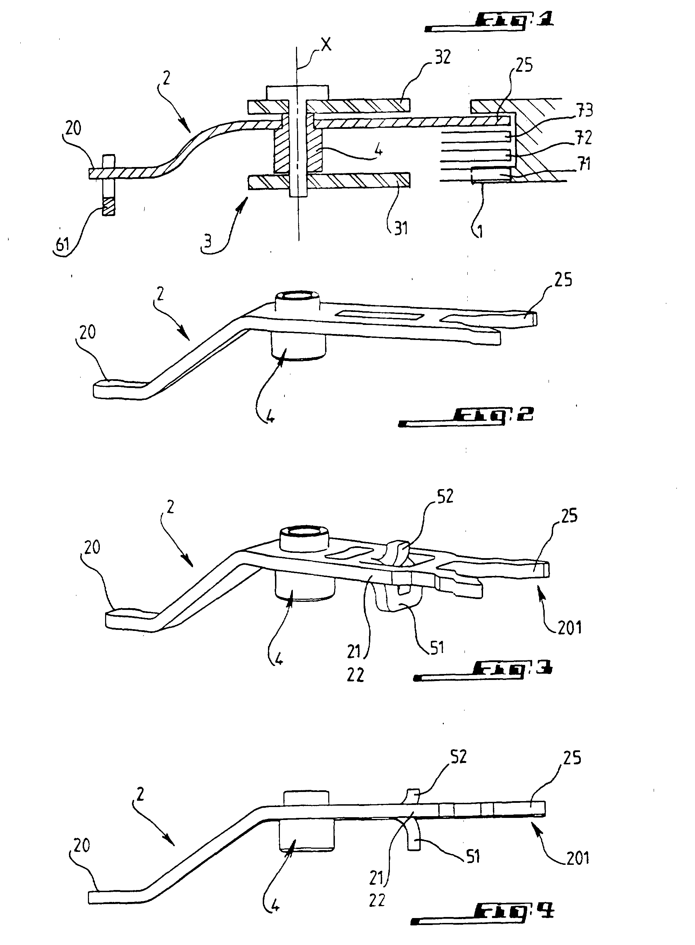

Comme annoncé précédemment (figure 1), l'invention concerne un dispositif de commande de passage de marche arrière pour boîte de vitesses, comprenant essentiellement un doigt de passage 1, un levier 2 d'inversion de mouvement, une chape 3, et une cale d'épaisseur 4.

La chape 3 présente deux joues 31 et 32 disposées en regard l'une de l'autre et entre lesquelles le levier 2 est monté pivotant autour d'un axe de basculement X, intermédiaire entre les extrémités 20 et 25 du levier.

L'extrémité 25 du levier, qui constitue l'extrémité menée de ce levier, est actionnée à volonté par le doigt de passage 1, tandis que l'extrémité 20, qui constitue l'extrémité menante de ce levier 2, actionne par exemple la crosse 61 de la fourchette 60 de marche arrière.

L'extrémité menée 25 du levier 2, généralement conformée en crosse, est traditionnellement alignée avec les crosses telles que 71, 72, et 73 des fourchettes qui commandent le passage des rapports de marche avant de la boîte de vitesses, par l'intermédiaire d'axes respectifs tels que 70.

La cale d'épaisseur 4 est par exemple constituée par un moyeu transversal, solidaire du levier 2, disposé sur l'axe de basculement X et s'étendant suivant cet axe X.

Cette cale 4 est par exemple interposée entre le levier 2 et chaque joue 31 et 32 de la chape 3, pour éviter un déplacement transversal du levier 2, le long de l'axe X, en direction de l'une ou l'autre de ces joues 31 et 32.

Le dispositif selon l'invention comprend en outre une ou deux cales de compensation, telles que 51 et 52, dont chacune est interposée entre une joue correspondante 31 ou 32 de la chape 3, et une zone d'alignement correspondante, 21 ou 22, du levier 2.

Chaque zone d'alignement telle que 21 ou 22 est disposée entre l'axe de basculement X du levier et l'une des extrémités 201 de ce levier.

Chacune des cales de compensation 51 et 52 est dimensionnée pour prendre appui sur la joue correspondante, respectivement 31 et 32, de la chape 3, et permet ainsi d'éviter une flexion du levier 2 en direction de cette joue 31 ou 32 lors de l'actionnement de ce levier, donc de maîtriser avec une grande précision la trajectoire de chaque zone d'alignement 21, 22, et de l'extrémité menée 25 du levier 2.

L'invention permet de minimiser le jeu de l'extrémité du levier, ce qui améliore le contact entre le doigt de passage et la crosse.

Par ailleurs, lorsque la marche arrière n'est pas sélectionnée, l'invention améliore l'interverrouillage, c'est-à-dire le blocage par le corps du doigt de l'inverseur (pour éviter tout passage intempestif de la marche arrière).

Dans le cas où le levier 2 est formé par une tôle découpée, chaque cale de compensation telle que 51 et 52 est par exemple formée par une languette découpée dans la tôle du levier 2 et pliée en direction de la joue correspondante 31 ou 32 de la chape 3.

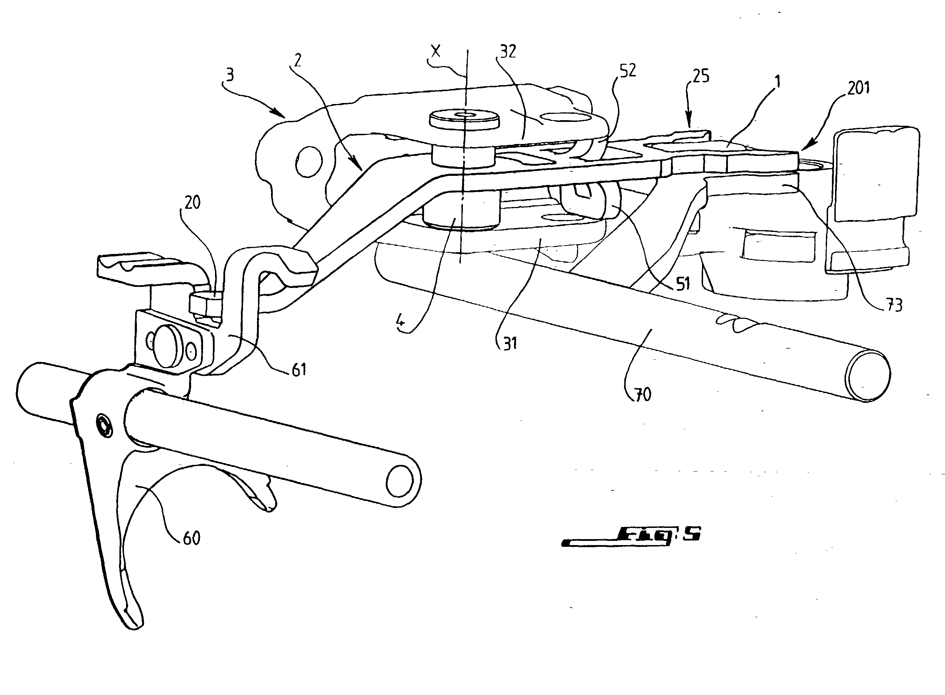

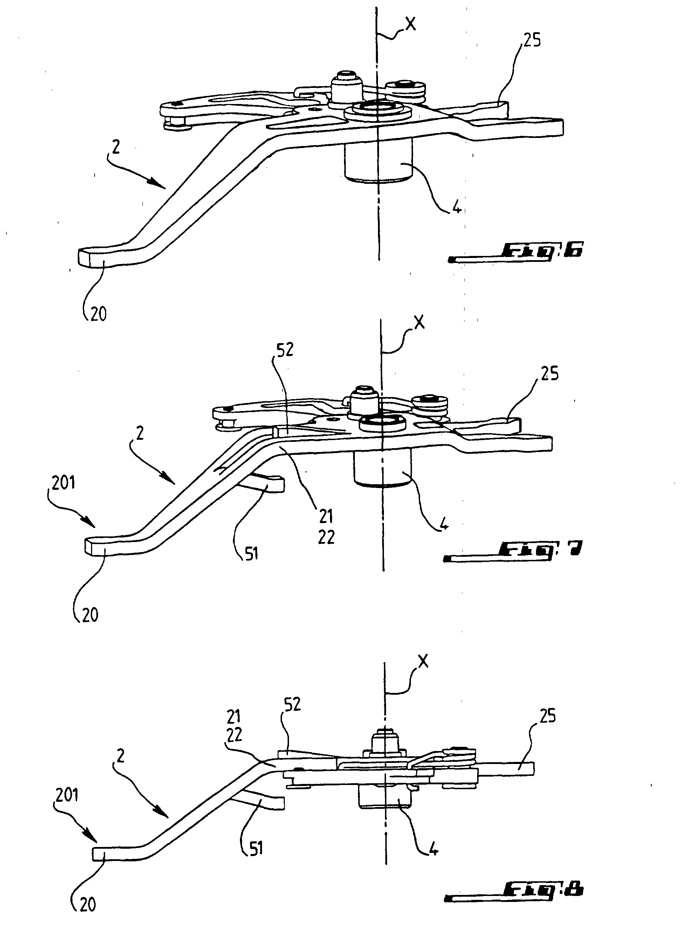

Eventuellement, l'une des languettes 52 peut être découpée à l'intérieur de l'autre languette 51, comme le montre la figure 3.

Par ailleurs ces languettes peuvent être disposées de part et d'autre du levier 2 suivant une direction sensiblement parallèle à l'axe X, de sorte que les zones d'alignement du levier, telles que 21 et 22, dont les positions parallèlement à l'axe X sont contrôlées par les cales de compensation 51 et 52, peuvent être confondues au moins en première approximation.

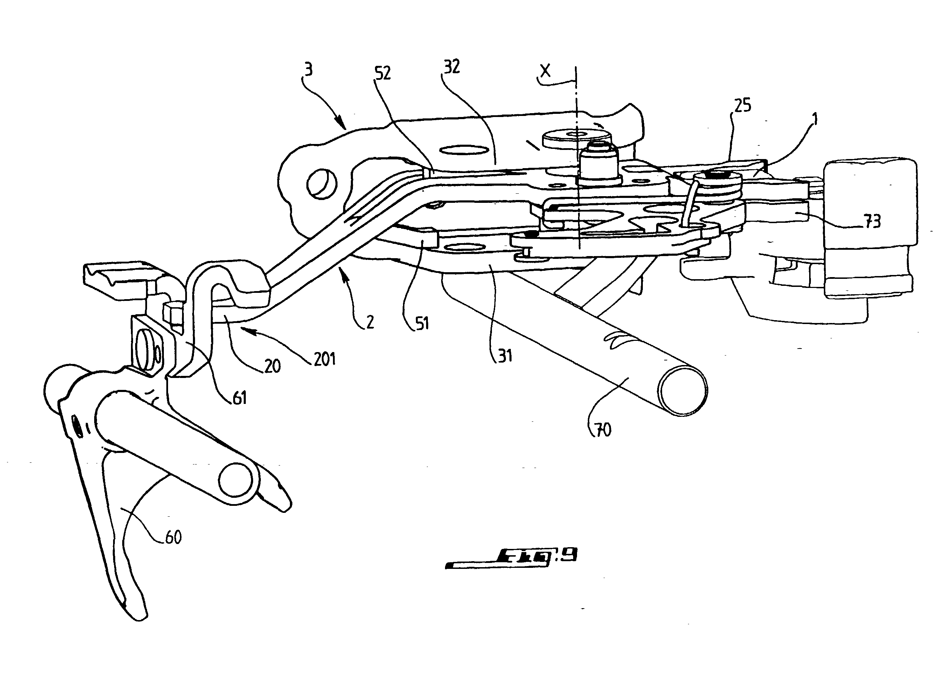

Selon la forme de réalisation du levier 2, les zones d'alignement 21 et 22 de ce levier 2 peuvent être disposées soit entre la cale d'épaisseur 4 et l'extrémité menée 25 du levier, qui constitue alors l'extrémité 201 précitée, comme le montrent les figures 3 à 5, soit entre la cale d'épaisseur 4 et l'extrémité menante 20 du levier, qui constitue alors l'extrémité 201 précitée, comme le montrent les figures 7 à 9.

Le premier cas (figures 3 à 5) correspond au mode de réalisation dans lequel le levier 2 est traditionnellement dit "inverseur", le second cas (figures 7 à 9) correspondant au mode de réalisation dans lequel le levier 2 est traditionnellement dit "basculeur".

## Revendications

1. Dispositif de commande de passage d'un rapport de marche arrière pour une boîte de vitesses, comprenant au moins un doigt de passage (1), un levier (2) d'inversion de mouvement, **caractérisé en ce qu'**il comprend une chape (3) et une cale d'épaisseur (4), la chape (3) présentant des première et seconde joues (31, 32) en regard l'une de l'autre, le levier (2) étant monté pivotant, entre les joues (31, 32) de la chape, autour d'un axe de basculement (X) intermédiaire entre des extrémités menante (20) et menée (25) de ce levier (2), l'extrémité menée (25) du levier (2) étant sélectrivement actionnée par le doigt de passage (1), et la cale d'épaisseur (4) étant disposée sur l'axe de basculement (X) du levier et interposée entre le levier (2) et la première joue (31) au moins de la chape (3) pour éviter un déplacement transversal du levier (2) vers cette première joue (31) au moins, et **en ce qu'**il comprend au moins une première cale de compensation (51) interposée entre la première joue (31) au moins de la chape (3) et une première zone d'alignement (21) du levier (2), intermédiaire entre l'axe de basculement (X) et une première des extrémités (201) de ce levier, pour éviter une flexion de ce levier (2) en direction de la première joue (31) de la chape (3).

2. Dispositif de commande suivant la revendication 1, **caractérisé en ce que** la cale d'épaisseur (4) est également interposée entre le levier (2) et la seconde joue (32) de la chape (3) pour éviter un déplacement transversal du levier (2) vers cette seconde joue (32).

3. Dispositif de commande suivant la revendication 2, **caractérisé en ce qu'**il comprend une seconde cale de compensation (52) interposée entre la seconde joue (32) de la chape (3) et une seconde zone d'alignement (22) du levier (2), intermédiaire entre l'axe de basculement (X) et la première extrémité (201) de ce levier (2), pour éviter une flexion de ce levier (2) en direction de la seconde joue (32) de la chape (3).

4. Dispositif de commande suivant l'une quelconque des revendications précédentes, **caractérisé en ce que** la cale d'épaisseur (4) est constituée par un moyeu transversal solidaire du levier (2) et disposé sur l'axe de basculement (X) de ce levier (2).

5. Dispositif de commande suivant l'une quelconque des revendications précédentes, **caractérisé en ce que** le levier (2) est formé par une tôle découpée.

6. Dispositif de commande suivant la revendication 5, **caractérisé en ce que** chaque cale de compensation (51, 52) est formée par une languette découpée dans la tôle du levier (2) et pliée.

7. Dispositif de commande suivant les revendications 3 et 6, **caractérisé en ce que** la languette formant l'une (52) des première et seconde cales de compensation (51, 52) est découpée dans la languette formant l'autre (51) cale de compensation.

8. Dispositif de commande suivant l'une quelconque des revendications précédentes combinée à la revendication 3, **caractérisé en ce que** les première et seconde zones d'alignement (21, 22) sont au moins sensiblement confondues.

9. Dispositif de commande suivant l'une quelconque des revendications précédentes, **caractérisé en ce que** la première extrémité (201) du levier (2) est constituée par l'extrémité menée (25) de ce levier (2).

10. Dispositif de commande suivant l'une quelconque des revendications 1 à 8, **caractérisé en ce que** la première extrémité (201) du levier (2) est constituée par l'extrémité menante (20) de ce levier (2).

## Patentansprüche

1. Vorrichtung zum Schalten des Rückwärtsgangs bei einem Schaltgetriebe, mit zumindest einem Schaltfinger (1) und einem Bewegungsumkehrhebel (2), **dadurch gekennzeichnet, dass** sie eine Abdeckung (3) und einen Unterlegkeil (4) enthält, wobei die Abdeckung (3) eine erste und eine zweite Wange (31, 32) aufweist, die einander gegenüberliegen, wobei der Hebel (2) zwischen den Wangen (31, 32) der Abdeckung um eine zwischenliegende Schwenkachse (X) herum schwenkbeweglich gelagert ist, die zwischen dem Antriebsende (20) und dem Abtriebsende (25) dieses Hebels (2) vorgesehen ist, wobei das Abtriebsende (25) des Hebels (2) selektiv von dem Schaltfinger (1) betätigt wird, und wobei der Unterlegkeil (4) auf der Schwenkachse (X) des Hebels angeordnet und zwischen dem Hebel (2) und zumindest der ersten Wange (31) der Abdeckung (3) eingefügt ist, um eine Querverlagerung des Hebels (2) zumindest zu dieser ersten Wange (31) hin zu vermeiden, und dass sie zumindest einen ersten Ausgleichskeil (51) enthält, der zwischen zumindest der ersten Wange (31) der Abdeckung (3) und einem ersten Ausrichtbereich (21) des Hebels (2) eingefügt ist, der zwischen der Schwenkachse (X) und dem ersten Ende (201) dieses Hebels liegt, um ein Durchbiegen dieses Hebels (2) in Richtung der ersten Wange (31) der Abdeckung (3) zu vermeiden.

2. Schaltvorrichtung nach Anspruch 1, **dadurch gekennzeichnet, dass** der Unterlegkeil (4) auch zwischen dem Hebel (2) und der zweiten Wange (32) der Abdeckung (3) eingefügt ist, um eine Querverlagerung des Hebels (2) zu dieser zweiten Wange (32) hin zu vermeiden.

3. Schaltvorrichtung nach Anspruch 2, **dadurch gekennzeichnet, dass** sie einen zweiten Ausgleichskeil (52) enthält, der zwischen der zweiten Wange (32) der Abdeckung (3) und einem zweiten Ausrichtbereich (22) des Hebels (2) eingefügt ist, der zwischen der Schwenkachse (X) und dem ersten Ende (201) dieses Hebels (2) liegt, um eine Durchbiegung dieses Hebels (2) in Richtung der zweiten Wange (32) der Abdeckung (3) zu vermeiden.

4. Schaltvorrichtung nach einem der vorhergehenden Ansprüche, **dadurch gekennzeichnet, dass** der Unterlegkeil (4) aus einer Quernabe besteht, die fest mit dem Hebel (2) verbunden und auf der Schwenkachse (X) dieses Hebels (2) angeordnet ist.

5. Schaltvorrichtung nach einem der vorhergehenden Ansprüche, **dadurch gekennzeichnet, dass** der Hebel (2) aus einem zugeschnittenen Blech gebildet ist.

6. Schaltvorrichtung nach einem der vorhergehenden Ansprüche, **dadurch gekennzeichnet, dass** jeder Ausgleichskeil (51, 52) aus einer aus dem Blech des Hebels (2) geschnittenen und umgebogenen Zunge gebildet ist.

7. Schaltvorrichtung nach Anspruch 3 und 6, **dadurch gekennzeichnet, dass** die Zunge, welche den einen Keil (52) des ersten und des zweiten Ausgleichskeils (51, 52) bildet, aus der Zunge geschnitten ist, welche den anderen Ausgleichskeil (51) bildet.

8. Schaltvorrichtung nach einem der vorhergehenden Ansprüche in Kombination mit Anspruch 3, **dadurch gekennzeichnet, dass** der erste und der zweite Ausrichtbereich (21, 22) zumindest im wesentlichen übereinstimmen.

9. Schaltvorrichtung nach einem der vorhergehenden Ansprüche, **dadurch gekennzeichnet, dass** das erste Ende (201) des Hebels (2) aus dem Abtriebsende (25) dieses Hebels (2) besteht.

10. Schaltvorrichtung nach einem der Ansprüche 1 bis 8, **dadurch gekennzeichnet, dass** das erste Ende (201) des Hebels (2) aus dem Antriebsende (20) dieses Hebels (2) besteht.

## Claims

1. Device for controlling reverse gear selection on a gearbox, featuring at least one selector finger (1), a movement reversing lever (2), **characterised in that** it has a yoke (3) and a shim (4), the yoke (3) presenting first and second cheeks (31, 32) which face one another, the lever (2) being mounted so as to pivot, between the cheeks (31, 32) of the yoke, on a tilt axis (X) intermediate between leading (20) and trailing (25) ends of said lever (2), the trailing end (25) of the lever (2) being selectively actuated by the selector finger (1), and the shim (4) being disposed on the tilt axis (X) of the lever and interposed between the lever (2) and at least the first cheek (31) of the yoke (3) in order to avoid transverse displacement of the lever (2) toward said at least first cheek (31) of the yoke (3), and **in that** it has at least a first compensating block (51) interposed between at least the first cheek (31) of the yoke (3) and a first alignment zone (21) of the lever (2), intermediate between the tilt axis (X) and a first one of the ends (201) of said lever, in order to avoid deflection of said lever (2) in the direction of the first cheek (31) of the yoke (3).

2. Control device according to claim 1, **characterised in that** the shim (4) is likewise interposed between the lever (2) and the second cheek (32) of the yoke (3), in order to avoid transverse displacement of the lever (2) toward said second cheek (32).

3. Control device according to claim 2, **characterised in that** it comprises a second compensating block (52) interposed between the second cheek (32) of the yoke (3) and a second alignment zone (22) of the lever (2), intermediate between the tilt axis (X) and the first end (201) of said lever (2), in order to avoid deflection of said lever (2) in the direction of the second cheek (32) of the yoke (3).

4. Control device according to any of the preceding claims, **characterised in that** the shim (4) is constituted by a transverse boss that is rigidly joined to the lever (2) and disposed on the tilt axis (X) of said lever (2).

5. Control device according to any of the preceding claims, **characterised in that** the lever (2) is formed by a sheet-metal cut-out.

6. Control device according to claim 5, **characterised in that** each compensating block (51, 52) is formed by a tongue cut out in the sheet metal of the lever (2) and folded.

7. Control device according to claims 3 and 6, **characterised in that** the tongue that forms one (52) of the first and second compensating blocks (51, 52) is cut out in the tongue forming the other (51) compensating block.

8. Control device according to any of the preceding claims in combination with claim 3, **characterised in that** the first and second alignment zones (21, 22) are at least substantially merged.

9. Control device according to any of the preceding claims, **characterised in that** the first end (201) of the lever (2) is constituted by the trailing end (25) of said lever (2).

10. Control device according to any of claims 1 to 8, **characterised in that** the first end (201) of the lever (2) is constituted by the leading end (20) of said lever (2).
